# FASCICULE DE BREVET EUROPEEN

(11) **EP 1 898 135 B1**
(45) Date de publication et mention de la délivrance du brevet: **24.06.2009**
(21) Numéro de dépôt: 07301267.6
(22) Date de dépôt: 24.07.2007
(51) Int. Cl.: F16K 11/10, F16K 31/06

(54) **Inverseur de distribution de gaz à commande magnétique**
Gasverteilungsumschalter mit Magnetsteuerung
Gas distribution diverter valve with magnetic control

(30) Priorité: 06.09.2006 FR 0653596
(43) Date de publication de la demande: 12.03.2008
(73) Titulaire: L'AIR LIQUIDE, Société Anonyme pour l'Etude et l'Exploitation des Procédés Georges Claude, 75007 Paris (FR)
(72) Inventeur: Cannet, Gilles, 95620 Parmain (FR); Lemesle, Gervais, 95310 Saint Ouen L'Aumone (FR)
(74) Mandataire: De Cuenca, Emmanuel Jaime

(56) Documents cités:
- WO-A-91/14122
- DE-A1-0102004 007 31
- DE-U1- 8 816 198
- GB-A- 913 060

## Description

La présente invention se rapporte à un inverseur d'alimentation en gaz comprenant une chambre de commutation dans laquelle débouche un premier orifice d'alimentation et un deuxième orifice d'alimentation destinés chacun à être raccordé à une source de gaz distincte, et un orifice de sortie destiné à être raccordé à un circuit d'utilisation, ainsi qu'à une installation de distribution de gaz comprenant un tel inverseur.

Un tel inverseur est décrit par exemple dans le document DE 8 816 198 U.

Les gaz médicaux ou industriels sont généralement conditionnés dans des bouteilles permettant de transporter le gaz depuis un lieu de production jusqu'à un lieu d'utilisation.

Sur le lieu d'utilisation, les bouteilles sont connectées à l'installation consommant le gaz qu'elles contiennent, et lorsque lesdites bouteilles sont vides ou qu'elles ont atteint leur date de péremption, elles sont déconnectées et remplacées par de nouvelles bouteilles.

Lorsque la bouteille à remplacer est vide ou déconnectée pour toute autre raison, l'installation se trouve privée de gaz. Ceci nuit à l'exploitation en réduisant sa production ou son service, et compromet éventuellement la qualité des produits fabriqués ou des services rendus. De plus, dans certains cas, cette rupture d'alimentation en gaz peut endommager certains composants de l'installation et peut créer des situations dangereuses liées, par exemple, à la pollution des circuits de gaz par l'atmosphère ambiante.

Des solutions ont été recherchées pour assurer un service continu du gaz avec des moyens simples, économiques et adaptés au cas particulier des gaz de grande pureté ou de composition très précise.

Une première solution connue pour ne pas nuire à l'exploitation d'une installation est d'interrompre l'exploitation lorsque le gaz vient à manquer et si possible synchroniser des opérations de maintenance et des remplacements préventifs des bouteilles. Cette solution implique de dimensionner précisément, voire de surdimensionner, la capacité des bouteilles. Cette solution est contraignante et ne s'applique pas à toutes les installations.

Une deuxième solution connue consiste à disposer d'une capacité tampon faisant partie de l'installation et capable de venir relayer la bouteille pendant son remplacement. Cette solution peut constituer une sécurité intéressante en particulier dans des installations comprenant de longues canalisations qui, moyennant une légère augmentation de leur diamètre, forment une capacité de réserve. Toutefois, si le débit est élevé ou si la pression de transport au sein de l'installation est faible, la canalisation ne peut suffire à elle seule sauf à devenir d'une taille très importante, et un véritable réservoir doit être ajouté à l'installation. Si cette solution n'est qu'une simple mesure de sécurité, elle revient à stocker une masse de gaz supérieure à ce qui est nécessaire. Dans le cas des gaz purs ou de composition très précise, il est en outre préférable de réduire les volumes et les surfaces intérieures des canalisations pour réduire les interactions entre le gaz véhiculé et lesdites canalisations. Si cette solution est appliquée systématiquement pour assurer les changements de bouteilles, ceux-ci doivent être programmés très précisément et les contraintes de la solution précédente réapparaissent ou bien une seconde bouteille doit être tenue à disposition prête à remplacer la bouteille en cours d'utilisation.

C'est l'objet d'une troisième solution connue. Cette solution consiste à disposer d'une seconde bouteille de gaz en réserve et d'un moyen permettant de basculer vers cette seconde bouteille lorsque nécessaire, c'est-à-dire lorsque la première bouteille de gaz doit être changée. Ce moyen d'inversion peut être automatique ou semi-automatique. Cette solution est communément désignée sous le terme « centrale de détente », et le moyen permettant de basculer d'une bouteille vers l'autre est appelé inverseur. De tels inverseurs automatiques ou semi-automatiques laissent donc, sans intervention humaine, débiter la bouteille en réserve lorsque la bouteille en service est vide ou ne débite plus suffisamment. Toutefois, ils nécessitent une intervention pour définir quelle bouteille est en service et quelle bouteille est en réserve. La centrale de détente peut également comporter une alarme de bouteille vide. II convient de noter que de telles centrales de détente sont généralement alimentées en haute pression, c'est-à-dire qu'elles reçoivent directement la pression sortant de la bouteille, ce qui implique son équipement en flexibles résistants aux hautes pressions et des opérations plus délicates de raccordement au moment de la mise en place des bouteilles neuves. De ce fait, ces installations sont généralement compliquées et chères. Elles sont également peu adaptées aux gaz purs en raison de la présence de volumes morts, de nombreuses connexions, et de systèmes d'étanchéité dynamique qu'elles comportent, notamment dans l'inverseur.

La présente invention vise à pallier tout ou partie des inconvénients précédemment évoqués, et consiste pour cela en un inverseur d'alimentation en gaz comprenant un corps présentant un premier orifice d'alimentation et un deuxième orifice d'alimentation destinés chacun à être raccordés à une source de gaz distincte, et au moins un orifice de sortie destiné à être raccordé à un circuit d'utilisation, lesdits premier et deuxième orifices d'alimentation débouchant de part et d'autre d'un coulisseau logé dans une chambre de commutation, et étant chacun équipés d'un système à clapet comprenant un moyen de renvoi élastique prenant appui contre le coulisseau, caractérisé en ce qu'il comprend au moins un moyen de commande magnétique extérieur à la chambre de commutation et apte à développer un champ magnétique permettant le déplacement et/ou le maintien du coulisseau dans une position donnée.

Ainsi, en équipant l'inverseur d'un moyen de commande magnétique, on évite tout problème d'étanchéité de l'inverseur tout en gérant facilement la mise en service des sources de gaz. Par ailleurs, un tel dispositif est facilement adaptable à toute pression.

Selon une première variante de réalisation, l'organe de commande magnétique est réalisé à partir d'au moins un électroaimant.

Selon une deuxième variante de réalisation, l'organe de commande magnétique est réalisé à partir d'au moins un aimant permanent.

Avantageusement, l'organe de commande magnétique se présente sous la forme d'un anneau magnétique apte à coulisser le long d'une partie du corps de l'inverseur.

De manière préférentielle, l'inverseur comprend des moyens latéraux de butée du coulisseau aptes à limiter son déplacement.

Avantageusement, au moins un orifice d'alimentation comprend un système de détente, au moins intermédiaire, du gaz. De cette manière, les valves ne sont pas directement exposées à la pression de sortie de la bouteille, ce qui permet de prévoir un inverseur adapté à des conditions de pression moindre. Le système de détente peut assurer simplement une pré-détente, le gaz passant par une pression intermédiaire avant de subir une nouvelle détente en sortie de l'inverseur ou une détente totale du gaz à la pression finale désirée. Cette dernière solution est moins privilégiée, car un inverseur apporte des pertes de charge supplémentaires dans le circuit.

De préférence encore, le système de détente est un système à courbe d'irrégularité montante. C'est-à-dire qu'on privilégiera un système de détente dans lequel, pour une consigne de détente fixe, la pression délivrée augmente lorsque la bouteille se vidant, la pression amont diminue.

Avantageusement, les moyens de retour élastiques sont des ressorts.

Préférentiellement, le corps est sensiblement tubulaire et abrite un coulisseau de forme sensiblement discoïde.

La présente invention se rapporte également à un installation de distribution de gaz comprenant une première bouteille de gaz et une deuxième bouteille de gaz, dite de réserve, destinée à desservir un circuit d'alimentation, caractérisé en ce que chaque bouteille de gaz est relié à un orifice d'alimentation d'un inverseur selon l'invention.

La mise en oeuvre de l'invention sera mieux comprise à la l'aide de la description détaillée qui est exposée ci-dessous en regard du dessin annexé dans lequel :
La figure 1 est une représentation schématique d'un inverseur selon l'invention en l'absence de gaz aux orifices d'entrée.
La figure 2 est une représentation de l'inverseur de la figure 1 dans une première position de service.
La figure 3 est une représentation de l'inverseur de la figure 1 dans la première position de service, débitant du gaz à partir de l'alimentation de réserve.
La figure 4 est une représentation de l'inverseur de la figure 1 dans une deuxième position de service.

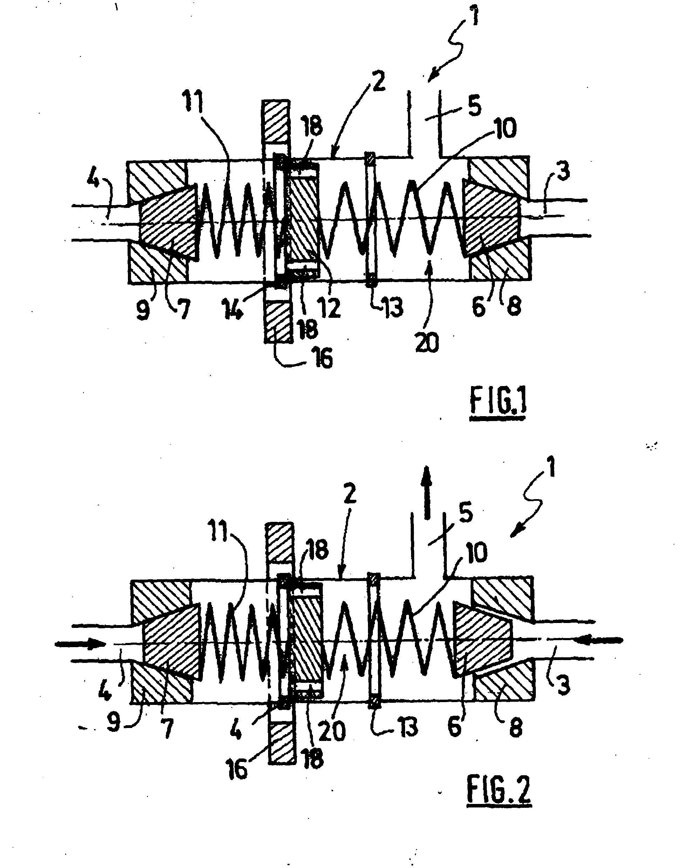

Un inverseur 1 selon l'invention, tel que représenté sur les figures 1 à 4, comprend un corps 2 creux sensiblement cylindrique définissant un espace intérieur destiné à former une chambre de commutation 20, dans laquelle débouchent un premier orifice d'alimentation 3 et un deuxième orifice d'alimentation 4 ainsi qu'un orifice de sortie 5 latéral.

Les orifices d'alimentation 3, 4 sont situés en regard l'un de l'autre sur un axe longitudinal de l'inverseur 1, et l'orifice de sortie 5 est situé à proximité du premier orifice d'alimentation 3.

Chaque orifice d'alimentation 3, 4 est destiné à être relié à une source de gaz distincte, de type bouteille de gaz (non représentées). L'orifice de sortie 5 est quant à lui destiné à être relié à un circuit de distribution en gaz pour desservir une installation utilisatrice. Les liaisons entre l'inverseur 1 et les bouteilles, d'une part, et l'inverseur 1 et le circuit de distribution, d'autre part, peuvent comprendre chacune un système de détente partielle ou totale du gaz.

Chaque orifice d'alimentation 3, 4 comprend une valve possédant un clapet 6, 7 apte à coopérer avec un siège 8, 9 de manière à pouvoir alternativement obturer ou ouvrir l'orifice d'alimentation 3, 4 correspondant.

Chaque clapet 6, 7 est monté à l'encontre d'un ressort 10, 11 tendant à sa fermeture, chaque ressort 10, 11 venant également en appui sur un coulisseau 12 commun de forme discoïde logé dans la chambre de commutation 20.

Le coulisseau 12 est apte à se déplacer longitudinalement entre une première position dans laquelle il a tendance à comprimer le ressort 11 agissant sur le clapet 7, et une deuxième position dans laquelle il a tendance à comprimer le ressort 10 agissant sur le clapet 6, changeant de cette manière les contraintes mécaniques s'exerçant sur les clapets 7, 6 respectivement, en fonction de son positionnement à l'intérieur de la chambre de commutation 20 entre les deux positions extrêmes.

Chacune de ces deux positions du coulisseau 12 est définie par un moyen de butée 13, 14 limitant le déplacement longitudinal dudit coulisseau 12.

On notera que le coulisseau 12 présente une pluralité de canaux 18 traversant uniformément répartis sur la périphérie du coulisseau 12 et destinés à permettre le passage du gaz depuis l'orifice d'alimentation 4 vers l'orifice de sortie 5.

La position du coulisseau 12 est commandée par un moyen de commande magnétique extérieur se présentant sous la forme d'un anneau aimanté 16 apte à coulisser le long du corps 2 de l'inverseur 1. Le corps 2 est bien évidemment réalisé dans un matériau non magnétique tel que de l'acier inoxydable austénitique ou du laiton.

Bien évidemment, les pressions délivrées par chaque bouteille de gaz peuvent être similaires ou différentes, on adaptera alors les raideurs des ressorts 10, 11 en conséquence.

Un utilisateur souhaitant activer l'inverseur 1 selon l'invention procédera de la façon suivante.

Initialement, lorsque les bouteilles ne délivrent pas de gaz ou ne sont pas connectées, les orifices d'alimentation 3, 4 sont à la pression atmosphérique et les ressorts 10, 11 forcent les clapets 6, 7 en position de fermeture.

Le coulisseau 12 est placé, à l'aide de l'anneau aimanté 16, de manière à ce que l'orifice d'alimentation 3 soit définit comme l'alimentation de service, l'orifice d'alimentation 4 étant l'alimentation dite de réserve.

Pour ce faire, l'anneau aimanté 16 est déplacé vers l'orifice d'alimentation 4, c'est-à-dire vers l'alimentation de réserve.

Cette position est représentée sur la figure 1.

En utilisation, chacun des orifices d'alimentation 3, 4 est reliée à une bouteille de gaz débitant du gaz respectivement à une pression P3 et P4, choisie similaires pour l'exemple.

Les forces s'exerçant sur le clapet 6 sont la pression d'alimentation en sortie de la bouteille correspondante, la pression régnant dans la chambre de commutation 20 et la force exercée par le ressort 10.

Les forces s'exerçant sur le clapet 7 sont la pression d'alimentation en sortie de la bouteille correspondante, la pression régnant dans la chambre de commutation 20 et la force exercée par le ressort 11.

Le coulisseau 12 étant placé tel que décrit précédemment, il tend à comprimer le ressort 11 de manière plus importante que le ressort 10. De ce fait, le ressort 10 exerce sur le clapet 6 une force moins importante que le ressort 11 sur le clapet 7. Les raideurs adaptées des ressorts 10, 11 font que la pression du gaz à l'orifice d'alimentation 4 n'est pas suffisamment élevée pour vaincre le ressort 11 tandis que la pression du gaz à l'orifice d'alimentation 3 est suffisante pour vaincre le ressort 10, ce qui permet l'ouverture du clapet 6 et la circulation du gaz depuis l'orifice d'alimentation 3 vers l'orifice de sortie 5. La bouteille reliée à l'orifice d'alimentation 3 est donc bien la bouteille de service.

II convient de noter qu'avec un système de détente à courbe d'irrégularité montante, la pression du gaz délivré par la bouteille reliée à l'orifice d'alimentation 3 augmente au fur et à mesure que la bouteille se vide, ce qui renforce le déséquilibre et conforte le fonctionnement du système.

Cette configuration est représentée sur la figure 2.

Lorsque la bouteille reliée à l'orifice d'alimentation 3 se vide, elle n'est plus capable de délivrer suffisamment de gaz pour maintenir le clapet 7 fermé, la pression régnant dans la chambre de commutation 20 diminuant.

C'est donc la bouteille reliée à l'orifice d'alimentation 4, bouteille dite de réserve qui débite du gaz, tandis que le clapet 6 est désormais fermé.

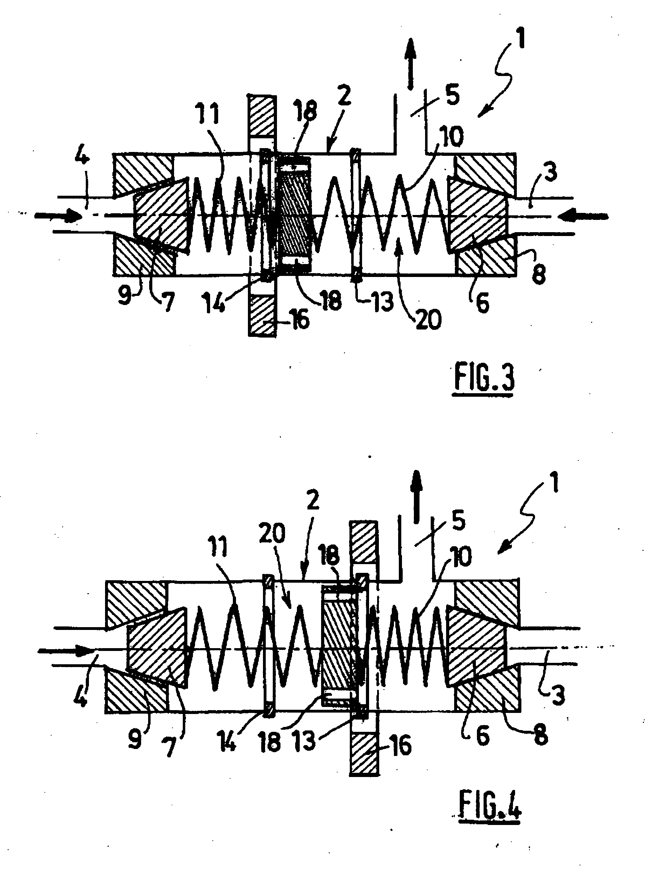

Cette configuration est représentée sur la figure 3.

L'orifice de sortie 5 est donc constamment alimenté soit par l'orifice d'alimentation 3 soit par l'orifice d'alimentation 4 tant que les deux bouteilles ne sont pas vides.

D'éventuelles fluctuations de la pression à l'orifice de sortie 5 seront compensées par un détendeur (non représenté) placé entre l'orifice de sortie 5 de l'inverseur 1 et chacune des applications souhaitées.

Lors de l'échange de la bouteille vide, il est préférable d'inverser la position du coulisseau 12 à l'aide de l'anneau aimanté 16, pour l'amener dans sa position où l'orifice d'alimentation 3 est l'alimentation de réserve. Cette configuration est représentée à la figure 4. Toutefois, en l'absence d'inversion de la position du coulisseau 12, il n'en résultera aucun dysfonctionnement majeur mais simplement une moins bonne gestion des bouteilles, la bouteille de réserve étant déjà partiellement vide.

Bien que l'invention ait été décrite avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention. On pourra notamment utiliser un système d'électroaimants pour remplacer l'anneau aimanté 16.

## Revendications

1. Inverseur (1) d'alimentation en gaz comprenant un corps (2) présentant un premier orifice d'alimentation (3) et un deuxième orifice d'alimentation (4) destinés chacun à être raccordés à une source de gaz distincte, et au moins un orifice de sortie (5) destiné à être raccordé à un circuit d'utilisation, lesdits premier et deuxième orifices d'alimentation débouchant de part et d'autre d'un coulisseau (12) logé dans une chambre de commutation (20), et étant chacun équipés d'un système à clapet (6, 7, 8, 9) comprenant un moyen de renvoi élastique (10, 11) prenant appui contre le coulisseau, **caractérisé en ce qu'**il comprend au moins un moyen de commande magnétique (16) extérieur à la chambre de commutation et apte à développer un champ magnétique permettant le déplacement et/ou le maintien du coulisseau dans une position donnée.

2. Inverseur (1) selon la revendication 1, **caractérisé en ce que** l'organe de commande magnétique est réalisé à partir d'au moins un électroaimant.

3. Inverseur (1) selon la revendication 1, **caractérisé en ce que** l'organe de commande magnétique (16) est réalisé à partir d'au moins un aimant permanent.

4. Inverseur (1) selon l'une quelconque des revendications 1 à 3, **caractérisé en ce que** l'organe de commande magnétique se présente sous la forme d'un anneau magnétique (16) apte à coulisser le long d'une partie du corps (2) de l'inverseur.

5. Inverseur (1) selon l'une quelconque des revendications 1 à 4, **caractérisé en ce qu'**il comprend des moyens latéraux de butée (14, 15) du coulisseau (12) aptes à limiter son déplacement.

6. Inverseur (1) selon l'une quelconque des revendications 1 à 5, **caractérisé en ce qu'**au moins un orifice d'alimentation (3, 4) est équipé d'un système de détente, au moins intermédiaire, du gaz.

7. Inverseur (1) selon la revendication 6, **caractérisé en ce que** le système de détente est un système à courbe d'irrégularité montante.

8. Inverseur (1) selon l'une quelconque des revendications 1 à 7, **caractérisé en ce que** les moyens de retour élastiques sont des ressorts (10, 11).

9. Inverseur (1) selon l'une quelconque des revendications 1 à 8, **caractérisé en ce que** le corps (2) est sensiblement tubulaire et abrite un coulisseau (12) de forme sensiblement discoïde.

10. Installation de distribution de gaz comprenant une première bouteille de gaz et une deuxième bouteille de gaz, dite de réserve, destinée à desservir un circuit d'alimentation, **caractérisé en ce que** chaque bouteille de gaz est relié à un orifice d'alimentation (3, 4) d'un inverseur (1) selon l'une quelconque des revendications 1 à 9.

## Claims

1. Gas feed diverter (1) comprising a body (2) having a first feed orifice (3) and a second feed orifice (4), each intended to be connected to a separate gas supply, and at least one outlet orifice (5) intended to be connected to a use circuit, said first and second feed orifices opening onto and on either side of a slide (12) housed in a switching chamber (20) and each being equipped with a poppet valve system (6, 7, 8, 9) comprising an elastic return means (10, 11) bearing against the slide, **characterized in that** it comprises at least one magnetic control means (16) external to the switching chamber and capable of developing a magnetic field enabling the slide to be moved into and/or held in a given position.

2. Diverter (1) according to Claim 1, **characterized in that** the magnetic control member is produced from at least one electromagnet.

3. Diverter (1) according to Claim 1, **characterized in that** the magnetic control member (16) is produced from at least one permanent magnet.

4. Diverter (1) according to any one of Claims 1 to 3, **characterized in that** the magnetic control member takes the form of a magnetic ring (16) capable of sliding along a portion of the body (2) of the diverter.

5. Diverter (1) according to any one of Claims 1 to 4, **characterized in that** it comprises lateral abutment means (14, 15) capable of limiting the movement of the slide (12).

6. Diverter (1) according to any one of Claims 1 to 5, **characterized in that** at least one feed orifice (3, 4) is equipped with a system for at least intermediate expansion of the gas.

7. Diverter (1) according to Claim 6, **characterized in that** the expansion system is a system governed by a curve of mounting irregularity.

8. Diverter (1) according to any one of Claims 1 to 7, **characterized in that** the elastic return means are springs (10, 11).

9. Diverter (1) according to any one of Claims 1 to 8, **characterized in that** the body (2) is approximately tubular and houses a slide (12) of approximately discoidal shape.

10. Gas delivery system comprising a first gas cylinder and a second gas cylinder, called reserve cylinder, which is intended to supply a feed circuit, **characterized in that** each gas cylinder is connected to a feed orifice (3, 4) of a diverter (1) according to any one of Claims 1 to 9.

## Patentansprüche

1. Gasverteilungsumschalter (1), der einen Körper (2) aufweist, der eine erste Versorgungsöffnung (3) und eine zweite Versorgungsöffnung (4) aufweist, die jeweils dazu bestimmt sind, an eine getrennte Gasquelle angeschlossen zu werden, und mindestens eine Ausgangsöffnung (5), die dazu bestimmt ist, an einen Nutzungskreislauf angeschlossen zu werden, wobei die erste und die zweite Versorgungsöffnung zu beiden Seiten eines Gleitstücks (12) münden, das in einer Umschaltkammer (20) untergebracht ist, und jeweils mit einem Klappensystem (6, 7, 8, 9) versehen sind, das ein elastisches Rückholmittel (10, 11) aufweist, das sich gegen das Gleitstück stützt, **dadurch gekennzeichnet, dass** er mindestens ein Magnetsteuermittel (16) außerhalb der Umschaltkammer aufweist, das ein Magnetfeld erzeugen kann, das das Bewegen und/oder das Halten des Gleitstücks in einer gegebenen Position erlaubt.

2. Umschalter (1) nach Anspruch 1, **dadurch gekennzeichnet, dass** das Magnetsteuerorgan ausgehend von mindestens einem Elektromagneten hergestellt ist.

3. Umschalter (1) nach Anspruch 1, **dadurch gekennzeichnet, dass** das Magnetsteuerorgan (16) ausgehend von mindestens einem Dauermagneten hergestellt ist.

4. Umschalter (1) nach einem der Ansprüche 1 bis 3, **dadurch gekennzeichnet, dass** das Magnetsteuerorgan die Form eines Magnetrings (16) hat, der entlang eines Teils des Körpers (2) des Umschalters gleiten kann.

5. Umschalter (1) nach einem der Ansprüche 1 bis 4, **dadurch gekennzeichnet, dass** er seitliche Anschlagmittel (14, 15) des Gleitstücks (12) aufweist, die seine Bewegung begrenzen können.

6. Umschalter (1) nach einem der Ansprüche 1 bis 5, **dadurch gekennzeichnet, dass** mindestens eine Versorgungsöffnung (3, 4) mit einem Entspannungssystem, das mindestens ein Zwischenentspannungssystem ist, des Gases ausgestattet ist.

7. Umschalter (1) nach Anspruch 6, **dadurch gekennzeichnet, dass** das Entspannungssystem ein System mit ansteigender Unregelmäßigkeitskurve ist.

8. Umschalter (1) nach einem der Ansprüche 1 bis 7, **dadurch gekennzeichnet, dass** die elastischen Rückholmittel Federn (10, 11) sind.

9. Umschalter (1) nach einem der Ansprüche 1 bis 8, **dadurch gekennzeichnet, dass** der Körper (2) im Wesentlichen röhrenförmig ist und ein im Wesentlichen scheibenförmiges Gleitstück (12) enthält.

10. Gasverteilungsanlage, die eine erste Gasflasche und eine zweite Gasflasche, Reserveflasche genannt, aufweist, die dazu bestimmt ist, den Versorgungskreislauf zu versorgen, **dadurch gekennzeichnet, dass** jede Gasflasche mit einer Versorgungsöffnung (3, 4) eines Umschalters (1) nach einem der Ansprüche 1 bis 9 verbunden ist.
